(19) Europäisches Patentamt
European Patent Office
Office européen des brevets

(11) **EP 2 157 533 A1**

(12) **EUROPÄISCHE PATENTANMELDUNG**

(43) Veröffentlichungstag:
**24.02.2010 Patentblatt 2010/08**

(51) Int Cl.:
**G06K 19/06** (2006.01)      **G06K 7/10** (2006.01)

(21) Anmeldenummer: **08162838.0**

(22) Anmeldetag: **22.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **F. Hoffmann-La Roche AG**
**4070 Basel (CH)**

(72) Erfinder: **Toedtli, Sergej**
**8832 Wollerau/SZ (CH)**

(74) Vertreter: **Hörschler, Wolfram Johannes**
**Isenbruck Bösl Hörschler Wichmann LLP**
**Eastsite One**
**Seckenheimer Landstrasse 4**
**68163 Mannheim (DE)**

(54) **Verfahren zur Identifikation von medizinischen Behältnissen**

(57) Es wird ein Verfahren zum Auslesen eines Codes (114) von Oberflächen (112) codierter medizinischer Behältnisse vorgeschlagen, insbesondere von Spritzenkörpern (110) aus Glas. Dabei wird ein Code (114) verwendet, bei welchem mindestens eine Oberfläche (112) des medizinischen Behältnisses mit einer Mehrzahl von Bildpunkten (128) mit jeweils mindestens einer Vertiefung (118) versehen ist. Es wird mindestens eine Lichtquelle (120) verwendet, mittels derer der Code (114) beleuchtet wird. Mittels mindestens eines Bilderfassungssystems (142) wird ein Bild des Codes (114) aufgenommen. Weiterhin wird ein Abbildungssystem (132) verwendet, mittels dessen aus einem Licht (122) der Lichtquelle (120) ein gebündelter Lichtstrahl (136) erzeugt wird. Die Oberfläche (112) wird dabei zumindest teilweise mit dem gebündelten Lichtstrahl (136) beleuchtet.

Fig. 2

**Beschreibung**

Die Erfindung betrifft ein Verfahren und eine Vorrichtung zur Identifikation von medizinischen Behältnissen. Derartige Verfahren und Vorrichtungen werden insbesondere im Bereich der Pharmazie oder der Diagnostik verwendet, um medizinische Behältnisse, wie beispielsweise Spritzenkörper aus Glas, korrekt zu identifizieren. Auf diese Weise lässt sich beispielsweise eine Sicherung gegen Fälschungen medizinischer Produkte oder ein Untermischungsschutz bei einer Befüllung der medizinischen Behältnisse gewährleisten.

Stand der Technik

In der Pharmazie spielt die Identifikation medizinischer Behältnisse durch entsprechende Codierung und Markierung pharmazeutischer Behältnisse eine wichtige Rolle. So muss insbesondere in vielen Fällen sichergestellt werden, dass nach dem Abfüllen pharmazeutischer Materialien, wie beispielsweise von Medikamenten, zu jeder Zeit abgefragt werden kann, welches pharmazeutische Material in dem Behältnis enthalten ist. Darüber hinaus sind Informationen, beispielsweise über eine Art einer Abfüllung, über einen Abfüller, über einen Hersteller, über ein Herstellungsdatum, über eine empfohlene Dosierung beziehungsweise über eine Verwendung oder Ähnliches, von wesentlicher Bedeutung, welche später, beispielsweise im Rahmen einer Verpackung der pharmazeutischen Behältnisse oder auch von einem Benutzer des pharmazeutischen Materials, leicht wieder abzufragen sein sollen.

Ein wesentlicher Punkt stellt dabei der so genannte Untermischungsschutz dar. Ein derartiger Untermischungsschutz soll sicherstellen, dass auch in einer Anlage, in welcher verschiedene Arten pharmazeutischer Materialien und/oder pharmazeutische Materialien mit unterschiedlichen Eigenschaften - wie beispielsweise unterschiedlichen Wirkstoffkonzentrationen - abgefüllt werden, eine Verwechslung der Behältnisse verhindert wird.

Zu diesem Zweck sind aus dem Stand der Technik zahlreiche Verfahren und Vorrichtungen bekannt, mittels derer pharmazeutische Behältnisse codiert werden können. Dabei können, wie auch im Rahmen der vorliegenden Anmeldung, so genannte "sprechende" Codes verwendet werden, welche eine verschlüsselte Information enthalten, oder auch "anonyme" Codes, welche beispielsweise lediglich einen eindeutigen Identifikator enthalten, dem beispielsweise erst mit Hilfe einer Datenbank die entsprechenden Informationen zugeordnet werden können.

Für den Code selbst können grundsätzlich beliebige Arten von Markierungen verwendet werden, die als Träger von Informationen geeignet sein können. Die Informationen können sich dabei von Behältnis zu Behältnis ändern. Beispielsweise können mittels Siebdruck angebrachte Farbcodes oder Barcodes verwendet werden. Für den Druck von Barcodes stehen neben Siebdruckverfahren eine Reihe von Technologien zur Verfügung, wie beispielsweise Ink-Jet-Drucken, Thermotransfer-Drucken oder Laserdruckverfahren. Derartig codierte pharmazeutische Behältnisse, wie insbesondere Glaskörper, lassen sich später identifizieren, indem dieser Code ausgelesen wird.

Druckverfahren oder ähnliche auf einer Tinte oder einem anderen Farbstoff basierende Verfahren weisen jedoch für die Markierung pharmazeutischer Behältnisse eine Reihe von Nachteilen auf. So wird ein neues Material, nämlich der Farbstoff bzw. die Tinte, in eine Produktions- oder Abfüllanlage eingebracht, dessen Verträglichkeit mit dem übrigen Prozess nicht in allen Fällen erwiesen ist. Zudem wird in der Regel ein markiertes Behältnis Umgebungsbedingungen unterworfen, in denen die Farbe bzw. Tinte leicht verwischt oder ganz entfernt wird, beispielsweise durch Wärmeeinwirkung, durch Lösemittel oder ähnliche Bedingungen. Wird hingegen die Markierung erst nach dem Abfüllen aufgebracht, so kann die Gefahr bestehen, dass zu dem Zeitpunkt der Aufbringung der Markierung bereits eine Verwechslung der Inhalte stattgefunden hat, beispielsweise durch Untermischung verschiedener, gleichzeitig in einer Linie abgefüllter Materialien und/oder Konzentrationen eines Materials.

Neben Farb- oder Tinten-basierten Markierverfahren sind aus dem Stand der Technik zahlreiche Verfahren bekannt, bei welchen Laser für die Markierung der Behältnisse eingesetzt werden können. Derartige Verfahren haben den Vorteil, dass zumindest weitgehend permanente Markierungen erzeugt werden können, die auch unter Einwirkung aggressiver Umgebungsbedingungen wie Wärme oder Lösemitteln nicht entfernt werden. Beispielsweise beschreibt WO 2006/117692 A1 ein Verfahren zur Identifizierung eines Glasbehältnisses, bei welchem in einem Markierungsschritt die Temperatur des Glasbehältnisses auf einem Wert unterhalb der Glasübergangstemperatur gehalten wird. Anschließend erfolgt eine punktuelle Behandlung mit elektromagnetischer Strahlung, durch welche das Glas des Behältnisses punktuell modifiziert und so markiert wird. Nachteilig an diesem Verfahren ist jedoch, dass durch die Laserbearbeitung Spannungen und Veränderungen im Glas auftreten können, welche das Behältnis permanent schädigen und sogar unbrauchbar machen können.

Aus DE 101 22 335 C1 und DE 102 34 002 A1 sind Verfahren bekannt, bei welchen ein Glas während eines Ziehprozesses mit einem Laser markiert wird. Das Glas weist dabei während des Ziehprozesses eine Temperatur oberhalb der Glastransformationstemperatur des Glases auf. Während dieser Temperaturbehandlung wird das Glas mit Laserpulsen beaufschlagt, um eine Markierung auf der Oberfläche des Glases zu erzeugen. Ein Vorteil dieses Verfahrens liegt darin, insbesondere beispielsweise gegenüber dem in WO 2006/117692 A1 beschriebenen Verfahren, dass bei dieser Behandlung keine Mikrorisse oder Spannungen in dem Glas erzeugt werden. Auf diese Weise werden mittels der in DE 101 22 335 C1 oder DE 102 34 002 A1 beschriebenen Verfahren beispielsweise Rohrgläser in einem Strangziehprozess erzeugt und gleichzeitig markiert. Auf diese Weise kann insbesondere eine Fälschungssicherung betrieben werden, da Rohrgläser, welche als Meterware ausgeliefert werden, mittlerweile Gegenstand von billigen Imitaten sein können.

Eine Problematik bei derartig erzeugten Codes besteht jedoch darin, dass, beispielsweise mittels des in DE 101 22 335 C1 oder in DE 102 34 002 A1 beschriebenen Verfahrens erzeugte Markierungen bzw. Codes (beide Ausdrücke werden im Folgenden synonym verwendet) nur sehr schwer automatisch erfassbar und auslesbar sind. Da es sich bei den auf diese Weise erzeugten Codes lediglich um lokale, in der Regel sehr kleine Oberflächendeformationen handelt, lassen sich diese Codes zwar mit bloßem Auge erkennen, eine automatische Erfassung und Decodierung ist jedoch in vielen Fällen sehr schwer. Dies liegt insbesondere daran, dass der Kontrast von automatisch generierten Bildern dieser Codes sehr schwach ist, so dass übliche Bilderkennungsverfahren entweder vollständig versagen oder mit einer hohen Unsicherheit zu Ergebnissen führen. Derartige Unsicherheiten sind jedoch insbesondere im Bereich medizinischer Behältnisse, deren Codes mit verschwindender Fehlertoleranz erkannt werden müssen, nicht tolerierbar.

## Aufgabe der Erfindung

Es ist daher eine Aufgabe der vorliegenden Erfindung, ein Verfahren und eine Vorrichtung zur Identifikation medizinischer Behältnisse bereitzustellen, welche die Nachteile bekannter Verfahren und Vorrichtungen vermeiden. Insbesondere sollen das Verfahren und die Vorrichtung eine Aufnahme eines kontrastreichen Bildes des Codes ermöglichen, welche auch mittels einer automatischen Bilderkennung leicht auswertbar ist.

## Offenbarung der Erfindung

Diese Aufgabe wird durch ein Verfahren und eine Vorrichtung mit den Merkmalen der unabhängigen Ansprüche gelöst. Vorteilhafte Weiterbildungen der Erfindung, welche einzeln oder in Kombination realisiert werden können, sind in den Unteransprüchen dargestellt. Allgemein kann das Verfahren insbesondere unter Verwendung einer erfindungsgemäßen Vorrichtung durchgeführt werden, und die Vorrichtung kann eingerichtet sein, um das erfindungsgemäße Verfahren zu implementieren. Insofern kann für mögliche Ausgestaltungen der Vorrichtung auf das Verfahren verwiesen werden und umgekehrt.

Es werden ein Verfahren und eine Vorrichtung zur Identifikation medizinischer Behältnisse vorgeschlagen. Der Begriff der Identifikation ist dabei im Rahmen der vorliegenden Erfindung weit zu fassen und beinhaltet grundsätzlich die Erfassung mindestens einer Information über das Behältnis. Beispielsweise kann die Identifikation eine Erkennung umfassen, dass es sich bei dem vorliegenden Behältnis um ein bestimmtes Behältnis handelt. Das Ergebnis einer derartigen Identifikation ist also in diesem Fall eine Information, dass es sich um ein bestimmtes Behältnis handelt. Alternativ oder zusätzlich kann die Identifikation jedoch auch zu einer anderen Art von codierten und/oder nicht-codierten Information führen, beispielsweise einer oder mehrerer der folgenden Informationen: eine anonyme Information, insbesondere eine Seriennummer; eine Information über einen Inhalt des Behältnisses; eine Information über einen Abfüller eines Inhalts des Behältnisses; eine Information über einen Inhalt des Behältnisses, insbesondere über die Art und/oder Beschaffenheit des Inhalts; eine Information über einen Ursprung des Inhalts des Behältnisses, insbesondere über einen Hersteller; eine Information über eine Verwendung des Inhalts des Behältnisses; eine Information über ein Mindesthaltbarkeitsdatum und/oder ein Verfallsdatum des Inhalts des Behältnisses. Auch Kombinationen der genannten Informationen und/oder anderer Informationen sind denkbar.

Bei dem medizinischen Behältnis kann es sich grundsätzlich um ein beliebiges Behältnis handeln, welches auch in der Medizin einsetzbar ist. Der Begriff der Medizin umfasst dabei auch die pharmazeutische Industrie, die Industrie der Diagnostika, den Bereich biologischer und/oder medizinischer Proben oder Ähnlichem. Grundsätzlich ist jedoch auch die Verwendung für Behältnisse aus anderen Bereichen möglich, beispielsweise für Behältnisse aus dem Bereich des täglichen Lebens, der Naturwissenschaften oder der Technik, beispielsweise für Behältnisse im Bereich der Lebensmittelindustrie und/oder im Bereich der Verpackung anderer Arten von Verbrauchsmaterialien. Insbesondere kann es sich bei dem Behältnis um medizinische Behältnisse aus Glas handeln. Die folgende Beschreibung wird dabei im Wesentlichen Bezug nehmen auf codierte Spritzenkörper, insbesondere Spritzenkörper aus Glas. Alternativ oder zusätzlich lassen sich jedoch auch andere medizinische Behältnisse für das vorgeschlagene Verfahren verwenden, beispielsweise Flaschen, Phiolen, Ampullen, Karpullen, Röhrchen oder ähnliche Behältnisse, insbesondere Behältnisse aus Glas oder einem Glas-ähnlichen Material. Grundsätzlich lassen sich jedoch auch andere Arten von Materialien einsetzen.

Unter einem Code sind allgemein Markierungen zu verstehen, welche mindestens eine Information enthalten. Dabei kann diese Information in verschlüsselter Form in dem Code enthalten sein. Alternativ oder zusätzlich kann der Code jedoch auch eine neutrale Information enthalten, welche nicht verschlüsselt ist. Beispielsweise lassen sich hier Seriennummern oder Ähnliches nennen. Der Code kann dabei bereits für einen Menschen erkennbar und/oder entschlüsselbar sein, so dass bereits ein Mensch die mindestens eine Information zumindest in einer Rohfassung auslesen kann. Beispielsweise können in dem Code alphanumerische Zeichen enthalten sein. Alternativ oder zusätzlich kann der Code auch derart beschaffen sein, dass erst mittels einer Maschine, beispielsweise eines Computers, nach dem Auslesen des Codes eine Gewinnung der mindestens einen Information möglich ist.

Besonders bevorzugt ist es, wenn der Code mindestens einen Barcode enthält, vorzugsweise einen ein- oder zwei-dimensionalen Barcode. Hieraus ist es wiederum besonders bevorzugt, wenn der Barcode einen so genannten Data-Matrix-Code umfasst, also einen zwei-dimensionalen Code, bei welchem ein zwei-dimensionales Bitmuster eingesetzt wird. Dieses Bitmuster setzt sich in der Regel aus so genannten Modulen als kleinsten Informationseinheiten zusammen. Je nachdem, ob diese Module mit einem Punkt (im Folgenden auch als "Bildpunkt" bezeichnet) markiert sind oder nicht, nehmen diese Module numerisch den Wert 0 oder 1 an bzw. umgekehrt. Auf diese Weise werden die Module zu Trägern einer digitalen Information. Selbstverständlich sind auch andere Arten von Mustern als zwei-dimensionale Data-Matrix-Codes möglich, beispielsweise ein-dimensionale Punktmuster, beispielsweise mit einer ein-dimensionalen Aneinanderreihung von Modulen der beschriebenen Art.

Das Verfahren bzw. die Vorrichtung dienen zur Identifikation des medizinischen Behältnisses, was ein Auslesen des mindestens einen Codes von einer Oberfläche des medizinischen Behältnisses umfassen kann. Unter einem Auslesen wird dabei im Rahmen der vorliegenden Erfindung ein Vorgang verstanden, bei welchem der Code derart erfasst wird, dass, in einem weiteren Teilschritt des Verfahrens oder in einem zusätzlichen, nicht zum Verfahren gehörigen Teilschritt, die mindestens eine in dem Code enthaltene Information ermittelt werden kann, beispielsweise die verschlüsselte Information und/oder die Seriennummer. Insofern ist der Begriff "Auslesen" im Rahmen der vorliegenden Erfindung weit zu fassen. Das Verfahren kann weiterhin sogar das Aufbringen des Codes mit umfassen.

Dabei wird erfindungsgemäß ein Code verwendet, bei welchem mindestens eine Oberfläche des medizinischen Behältnisses mit einer Mehrzahl von Bildpunkten mit jeweils mindestens einer Vertiefung versehen ist. Insofern kann der Code, beispielsweise der Data-Matrix-Code der oben beschriebenen Art, beispielsweise nach dem aus dem Stand der Technik bekannten Verfahren der DE 101 22 335 C1 und DE 102 34 002 A1 erzeugt sein. Beispielsweise kann zur Erzeugung des Codes die Oberfläche des medizinischen Behältnisses mit einem Laser, insbesondere einem gepulsten Laser, insbesondere einem gepulsten Laser im infraroten Spektralbereich, markiert werden. Wie oben dargestellt, erfolgt diese Markierung vorzugsweise bei einer Temperatur oberhalb der Glastransformationstemperatur. Beispielsweise kann ein $CO_2$-Laser verwendet werden. Grundsätzlich lassen sich jedoch auch andere Verfahren zur Markierung einsetzen, beispielsweise das in WO 2006/117692 A1 beschriebene Verfahren.

Der Code ist dabei derart ausgestaltet, dass dieser eine Mehrzahl von Bildpunkten mit jeweils mindestens einer Vertiefung aufweist. Beispielsweise kann der Code eine Mehrzahl von Modulen enthalten, wobei jedes Modul mit einem Bildpunkt mit der Vertiefung markiert sein kann oder nicht. Entsprechend können diese Module wiederum den Wert 0 oder 1 annehmen bzw. umgekehrt und können somit wiederum Träger binärer Informationen sein. Die mindestens eine Vertiefung, wobei vorzugsweise genau eine Vertiefung pro Bildpunkt vorgesehen ist, kann beispielsweise abgerundet, insbesondere halbkreisförmig oder linsenförmig ausgestaltet sein.

Bei dem vorgeschlagenen Verfahren wird weiterhin eine Lichtquelle verwendet, um den Code zu beleuchten. Unter einer Lichtquelle ist dabei eine Quelle elektromagnetischer Strahlen im sichtbaren und/oder infraroten und/oder ultravioletten Spektralbereich zu verstehen, wobei die elektromagnetischen Strahlen derart emittiert werden, dass diese zumindest einen Teilbereich der mit dem Code versehenen Oberfläche erreichen.

Weiterhin wird bei dem vorgeschlagenen Verfahren ein Bilderfassungssystem verwendet, um ein Bild des Codes aufzunehmen. Wie unten näher ausgeführt wird, kann dieses Bilderfassungssystem insbesondere einen Bildsensor zur Aufnahme von Bilddaten umfassen. Dieser Bildsensor kann beispielsweise auf die Art des Codes angepasst sein. So kann dieser Bildsensor beispielsweise ein ein- oder zwei-dimensionales Array von einzelnen photosensitiven Elementen umfassen. Beispielsweise kann der Bildsensor einen CCD- und/oder CMOS-Chip umfassen. Auf diese Weise lässt sich mittels des Bilderfassungssystems eine Bildinformation von dem Code, also des vollständigen Codes oder eines Teils dieses Codes, aufnehmen, welche beispielsweise unmittelbar auswertbar ist und/oder später weiterverarbeitet werden kann.

Insofern können das Verfahren und die Vorrichtung zumindest weitgehend bekannten Verfahren und Vorrichtungen entsprechen. Dabei hat es sich jedoch gezeigt, dass der Beleuchtungstechnik eine entscheidende Bedeutung zukommt. Herkömmliche Verfahren und Vorrichtungen, welche insbesondere aus dem Bereich der Erkennung von nicht-transparenten, gedruckten Codes auf Papier entwickelt wurden, wie beispielsweise gedruckten Barcodes, nutzen zur Erfassung des Codes verschiedene Beleuchtungstechniken. Insbesondere werden dabei in Auflichtverfahren oder Transmissionsverfahren diffuse Lichtquellen zur Beleuchtung eingesetzt, also in der Regel flächenhafte Lichtquellen. Diese Lichtquellen wirken als so genannte Lambert'sche Strahler und senden Licht in alle Raumrichtungen vor der Lichtquelle aus. Neben Flächenstrahlern lassen sich derartige diffuse Lichtquellen beispielsweise auch durch Mattscheiben oder Ähnliches erzeugen.

Erfindungsgemäß wurde jedoch erkannt, dass derartige übliche Beleuchtungstechniken zwar in der Regel geeignet sind, um Barcodes gedruckter Art, beispielsweise gedruckte zwei-dimensionale Data-Matrix-Codes oder ein-dimensionale Barcodes auf Papier oder ähnlichen Oberflächen mit gutem Kontrast zu detektieren. Für die beschriebenen Codes, welche sich aus Vertiefungen in der Oberfläche des medizinischen Behältnisses zusammensetzen, wurde jedoch herausgefunden, dass derartige herkömmliche Beleuchtungstechniken ungeeignet sind.

Dementsprechend wird erfindungsgemäß vorgeschlagen, statt eines diffusen Lichts einen gebündelten Lichtstrahl zu verwenden, also einen Lichtstrahl, welcher Randstrahlen aufweist, die den Strahl begrenzen. Damit unterscheidet sich das für die Beleuchtung erfindungsgemäß eingesetzte Licht von diffusen Lichtquellen, welche in alle Raumrichtungen emittieren. Die Randstrahlen können beispielsweise kreiskegelförmig oder ellipsenkegelförmig ausgestaltet sein. Besonders bevorzugt ist es, wenn der gebündelte Lichtstrahl im Bereich der Oberfläche zumindest teilweise als konvergierender Lichtstrahl ausgestaltet ist, also als Lichtstrahl, dessen Randstrahlen aufeinander zulaufen.

Es wird zur Erzeugung des gebündelten Lichtstrahls dementsprechend vorgeschlagen, ein Abbildungssystem zu verwenden, mittels dessen aus einem Licht der Lichtquelle ein gebündelter Lichtstrahl, insbesondere ein konvergierender Lichtstrahl, erzeugt wird. Mit diesem gebündelten Lichtstrahl wird die Oberfläche des medizinischen Behältnisses zumindest teilweise beleuchtet. Insbesondere kann die mit dem Code versehene Oberfläche ganz oder teilweise beleuchtet werden.

Unter einem Abbildungssystem ist dabei ein System zu verstehen, welches mindestens ein Element mit abbildenden Eigenschaften aufweist. Beispielsweise kann das Abbildungssystem mindestens eine Linse, insbesondere mindestens eine Sammellinse und/oder mindestens einen gekrümmten Spiegel, beispielsweise einen Parabolspiegel, umfassen. Dabei lassen sich komplexe Abbildungssysteme, wie beispielsweise Objektive, einsetzen, um den gebündelten Lichtstrahl herzustellen. Es können jedoch auch einfache Konstruktionen verwendet werden, beispielsweise Abbildungssysteme, welche genau eine Sammellinse aufweisen. Auch komplexere Linsensysteme sind jedoch möglich.

Die Erfindung beruht auf der Erkenntnis, dass bei diffusen Lichtquellen eine Vielzahl möglicher Strahlenverläufe existiert, welche einen Bildpunkt bzw. die darin aufgenommene Vertiefung umgehen und welche für einen Betrachter dennoch aus Richtung dieses Bildpunktes zu kommen scheinen. Hierdurch wird der Kontrast jedes Bildpunktes stark vermindert, so dass übliche Bilderkennungssysteme, welche beispielsweise in der Druckindustrie verwendet werden um gedruckte Barcodes auf Papieroberflächen zu erkennen, mit diesen geringen Kontrasten keine Auswertung der in den Codes enthaltenen Informationen mehr vornehmen können. Die Trennung "schwarzer" Bildpunkte vom Hintergrund gelingt in diesen Fällen nicht mehr.

Bei der erfindungsgemäßen Verwendung gebündelter Lichtstrahlen hingegen, insbesondere konvergierender Lichtstrahlen, wird die Anzahl der Lichtstrahlen, welche an einem Bildpunkt vorbei verlaufen und dennoch für einen Betrachter aus Richtung des Bildpunktes zu kommen scheinen, stark vermindert. Lediglich bei einer exakten linearen Durchleuchtung, bei welcher sich beispielsweise die Lichtquelle und das Bilderfassungssystem gegenüberliegen, kann es vorkommen, dass die als Linsen wirkenden Vertiefungen die Lichtquelle linear durchlaufen, so dass ein kleiner, heller Punkt im Inneren der Bildpunkte auftreten kann. Da dieser helle Punkt jedoch eine Singularität darstellt, lässt sich dieser durch geeignete optische Mittel und/oder Bildverarbeitungsroutinen leicht eliminieren.

Insgesamt stellen die erfindungsgemäße Vorrichtung und das erfindungsgemäße Verfahren somit Mittel bereit, welche eine einwandfreie Auslesung des Codes und eine Erkennung des Codes mittels üblicher Bildverarbeitungstechniken ermöglichen, ohne das komplexe Bildverarbeitungsroutinen erforderlich wären. Der Code lässt sich damit fehlerfrei oder zumindest nahezu fehlerfrei lesen.

Besonders bevorzugt ist es, wenn das Bildverarbeitungssystem und die Lichtquelle auf gegenüberliegenden Seiten der Oberfläche angeordnet sind. Dies bedeutet, dass ein Transmissionsverfahren für die Beleuchtung verwendet wird, bei welchem ein Material des medizinischen Behältnisses von dem Licht der Lichtquelle bzw. von dem Lichtstrahl durchleuchtet wird. Auch andere Techniken sind jedoch grundsätzlich möglich.

Weiterhin ist es bevorzugt, wenn die Lichtquelle auf die codierte Oberfläche abgebildet wird. Dies bedeutet, dass mittels des Abbildungssystems ein Bild der Lichtquelle auf der codierten Oberfläche erzeugt wird. Dies kann insbesondere dadurch bewerkstelligt werden, dass das Abbildungssystem Brennpunkte aufweist, wobei die Lichtquelle und der Code in einem größeren Abstand von dem Abbildungssystem beabstandet sind als die jeweiligen Brennpunkte. Weist beispielsweise das Abbildungssystem eine Brennweite f, ist die Lichtquelle in einem Abstand g von dem Abbildungssystem (bzw. einer Hauptebene des Abbildungssystems) entfernt und ist die mit dem Code versehene Oberfläche des medizinischen Behältnisses in einem Abstand x von dem Abbildungssystem (bzw. einer Hauptebene des Abbildungssystems) entfernt, so ist es besonders bevorzugt, wenn für den Abstand x folgende Relation gilt:

$$x = \frac{1}{\dfrac{1}{f} - \dfrac{1}{g}}$$

Dies bedeutet, dass vorzugsweise die Lichtquelle nach der so genannten Linsengleichung exakt auf die Oberfläche abgebildet wird. Es ist jedoch auch eine leichte Abweichung von dieser exakten Abbildung möglich, beispielsweise eine Abweichung um nicht mehr als 10%, vorzugsweise nicht mehr als 5% und besonders bevorzugt um nicht mehr als 1%. Bevorzugt ist es also, wenn die Lichtquelle im Wesentlichen auf die codierte Oberfläche abgebildet wird, was eine exakte Abweichung einschließlich der genannten Defokussierungstoleranzen beinhalten soll.

Eine Defokussierung von einer exakten Abbildung kann auch gezielt genutzt werden, beispielsweise um die oben dargestellten Zentrumsstrahl-Problematiken zu umgehen. So können beispielsweise mittels des vorgeschlagenen Verfahrens die einzelnen Bildpunkte als schwarze Punkte von dem Bilderfassungssystem erfasst werden, welche sich scharf von einem hellen Hintergrund abheben. Aufgrund der oben beschriebenen Problematik durchgehender Zentrumsstrahlen, welche von der Lichtquelle ausgehen, können jedoch die Zentren dieser schwarzen Bildpunkte helle Punkte aufweisen. Mittels einer gezielt herbeigeführten Defokussierung können diese hellen Bildpunkte optisch "ausgeschmiert" und damit zumindest weitgehend eliminiert werden. Alternativ oder zusätzlich lassen sich jedoch auch Software-gestützte Bildverarbeitungsverfahren einsetzen. Wiederum alternativ oder zusätzlich lässt sich auch ein "Ausschmieren" zur Eliminierung der hellen zentralen Bildpunkte durch eine gezielt herbeigeführte Defokussierung einer Optik des Bilderfassungssystems erreichen, beispielsweise durch eine Defokussierung eines Objektivs des Bilderfassungssystems.

Die Lichtquelle kann insbesondere im Wesentlichen punktförmig ausgestaltet sein. Unter "im Wesentlichen punktförmig" sind dabei auch Abweichungen von einer exakten Punktform zu verstehen, beispielsweise im Rahmen von Lichtquellen, welche eine lichtemittierende Fläche von lediglich maximal 1mm$^2$, vorzugsweise 0,5 mm$^2$ oder weniger aufweisen. Derartige Lichtquellen können beispielsweise Leuchtdioden, insbesondere anorganische Leuchtdioden sein, welche typischerweise lichtemittierende Flächen im Bereich von wenigen 100 $\mu$m$^2$ aufweisen.

Das Bilderfassungssystem kann, wie oben dargestellt, einen Bildsensor, beispielsweise gemäß der oben beschriebenen Ausgestaltungen, umfassen. Dieser Bildsensor ist eingerichtet, um Bilddaten, beispielsweise ein- oder zwei-dimensionale Bilddaten, aufzunehmen.

Weiterhin kann das Bilderfassungssystem zusätzliche Elemente umfassen. Besonders bevorzugt ist es, wenn das Bilderfassungssystem weiterhin ein Bilderkennungssystem umfasst. Unter einem Bilderkennungssystem ist dabei ein System zu verstehen, welches in der Lage ist, zusammengehörige Bildbereiche der Bilddaten aufgrund ihrer Bildinformationen zu erkennen. Beispielsweise lassen sich auf diese Weise die Bildpunkte des Codes erkennen und/oder es lässt sich erkennen, ob ein bestimmtes Modul des Codes mit einem Bildpunkt markiert ist oder nicht, also die Information "1" oder "0" (oder umgekehrt) aufweist.

Dabei kann, aufgrund des stark verbesserten Kontrasts der mittels des vorgeschlagenen Verfahrens erzeugten Bilddaten, das Bilderkennungssystem sehr einfach ausgestaltet sein. So kann das Bilderkennungssystem beispielsweise ausgestaltet sein, um ausschließlich aufgrund einer Histogrammanalyse mit einer fest vorgegebenen Grauwertschwelle die Bildpunkte vom Hintergrund zu unterscheiden. Auf diese Weise kann das Bilderkennungssystem eingereicht sein, um Bildpunkte als geschlossene dunkle Regionen, vorzugsweise als geschlossene dunkle Kreisscheiben, zu erkennen. Diese Erkennung kann vorzugsweise ausschließlich aufgrund der genannten Grauwertanalyse und/oder einer Histogrammanalyse erfolgen. Auf diese Weise lässt sich mittels des Bilderkennungssystems ein Bildpunktmuster aufnehmen, aus welchem sich unmittelbar die Informationen des Codes auslesen lassen.

Ausführungsbeispiele

Weitere Merkmale und Einzelheiten der vorliegenden Erfindung ergeben sich aus der nachfolgenden Beschreibung bevorzugter Ausführungsbeispiele. Die Ausführungsbeispiele sind in den Figuren schematisch dargestellt. Dabei bezeichnen gleiche Bezugsziffern oder funktionsgleiche bzw. in ihren Funktionen einander entsprechende Elemente. Die Erfindung ist nicht auf die Ausführungsbeispiele beschränkt.

Im Einzelnen zeigt:

Figur 1 eine dem Stand der Technik entsprechende Beleuchtung eines Codes auf einem medizinischen Behältnis;

Figur 2 eine erfindungsgemäße Beleuchtung des Codes;

Figur 3 eine mögliche Vorrichtung zum Auslesen eines Codes;

Figur 4 ein nach einem herkömmlichen Verfahren aufgenommener Code; und

Figur 5 ein nach einem erfindungsgemäßen Verfahren aufgenommener Code.

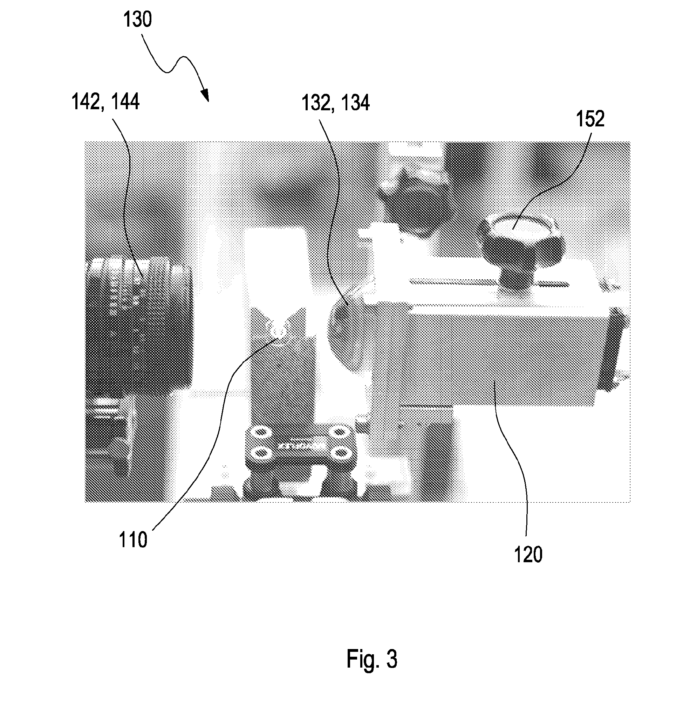

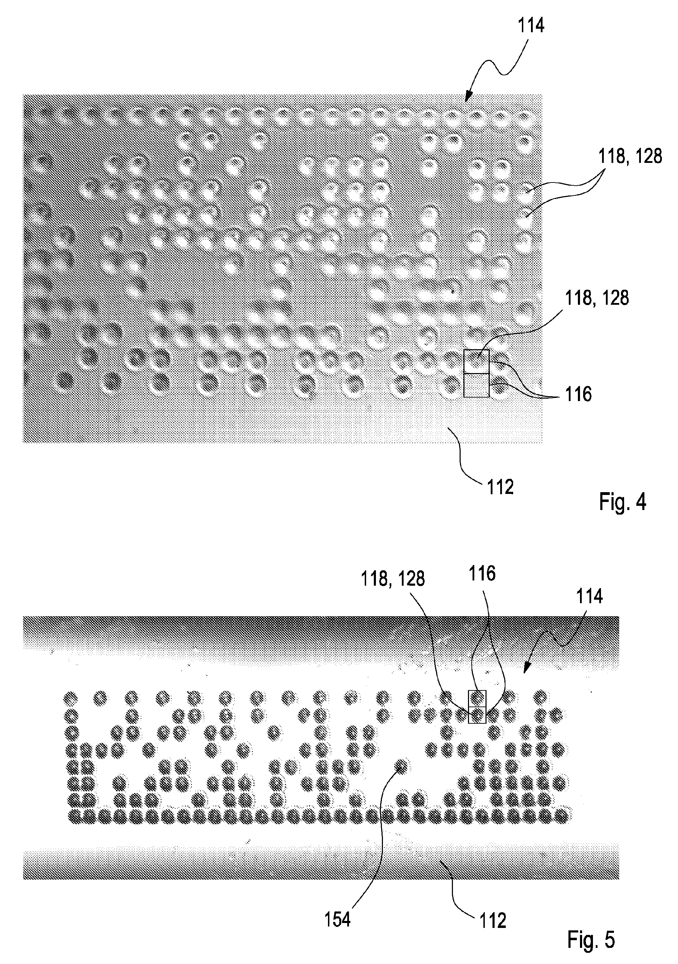

Im Folgenden werden Ausführungsbeispiele der Erfindung beschrieben, welche sich auf das Aufbringen und Auslesen von Data-Matrix-Barcodes auf Glaskörpern für die pharmazeutische Industrie beziehen. Als Beispiel wurden medizinische Behältnisse in Form von Spritzenkörpern 110 aus Glas gewählt, wie sie beispielsweise in Figur 3 erkennbar sind. Diese Spritzenkörper 110 wurden mittels eines Verfahrens, wie es beispielsweise in DE 101 22 335 C1 oder DE 102 34 002 A1 beschrieben ist, durch Laserbeschuss markiert und somit auf einer Oberfläche 112, wie es beispielsweise in den Figuren 4 und 5 erkennbar ist, mit einem Data-Matrix-Code 114 versehen. Dieser Data-Matrix-Code 114 weist eine Matrix von aneinandergrenzenden Modulen 116 auf, welche in Figur 4 und in Figur 5 exemplarisch markiert sind und welche mit der Bezugsziffer 116 bezeichnet sind. Jedes dieser Module 116, die hier zu einer zweidimensionalen Matrix angeordnet sind, kann mit einem Bildpunkt in Form einer Vertiefung 118 markiert sein, wie in den Figuren 4 und 5 jeweils eines der gekennzeichneten Module 116, oder nicht. Je nachdem, ob eine Vertiefung 118 vorhanden ist oder nicht, kann dieses Modul 116 den binären Wert 1 oder 0 (oder umgekehrt) annehmen.

Für die Lasermarkierung kann weitgehend auf die DE 101 22 335 C1 und die DE 102 334 002 A1 verwiesen werden. Für die Markierungen wurden die Spritzenkörper 110 auf eine Temperatur oberhalb der Glastransformationstemperatur erwärmt, beispielsweise auf eine Temperatur von 580°C bis 600°C, und mit Laserpulsen eines $CO_2$-Lasers beaufschlagt.

Derartige Laser sind kostengünstig und robust und lassen sich auch im industriellen Maßstab einsetzen.

Die nach dieser Methode hergestellten Data-Matrix-Codes 114 zeichnen sich dadurch aus, dass an der Einschussstelle des Laserstrahls im Glas eine kalottenförmige Einprägung, nämlich die Vertiefung 118, entsteht. Diese Vertiefung 118 ist in der Regel dadurch gekennzeichnet, dass die Oberfläche im Bereich der Vertiefung 118 annähernd gleich glatt ist wie der Rest des Glaskörpers der Oberfläche 112. Anstelle einer Kalottenform mit kugelschalenförmigem Querschnitt kann die Vertiefung 118 grundsätzlich auch eine andere Form annehmen, beispielsweise eine Ellipsenform, eine polygonale Form oder Ähnliches. In jedem Fall wird sich jedoch in den meisten Fällen ein Streulinseneffekt durch die Vertiefung 118 ergeben.

Ein Auslesen derartiger Data-Matrix-Codes 114 und/oder anderer auf diese Art erzeugte Codes ist mit üblichen Beleuchtungsmethoden jedoch kaum durchführbar, da ein äußerst geringer Kontrast zwischen der Einschussstelle des Lasers im Bereich der Vertiefung 118 und dem umgebenden nicht-markierten Material des Spritzenkörpers 110 entsteht.

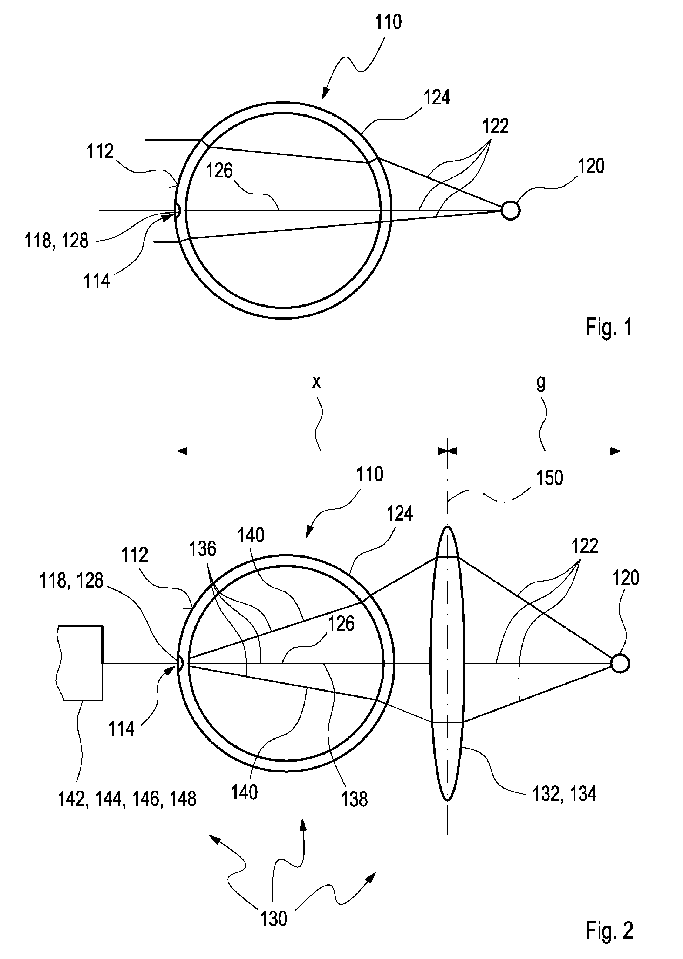

In Figur 1 ist eine herkömmliche Beleuchtungstechnik dargestellt. Dabei wird eine Lichtquelle 120 verwendet, welche hier lediglich symbolisch dargestellt ist und welche in der Regel als diffuse Lichtquelle ausgestaltet ist. Exemplarisch ist hier ein Durchlichtverfahren dargestellt, bei welchem das Licht 122 der Lichtquelle 120 einen Glaskörper 124 des Spritzenkörpers 110 durchdringt, um zum Data-Matrix-Code 114 zu gelangen. Das Licht 122 wird jedoch an den Vertiefungen 118 des Data-Matrix-Codes 114 stark gestreut, da diese als Streulinsen wirken. Lediglich ein in Figur 1 mit der Bezugsziffer 126 bezeichneter Zentrumsstrahl durchdringt die Vertiefung 118 und gelangt ungestört zu einem Betrachter. Auch bei Einsatz von gerichtetem Licht entstehen Spitzlichter an den Rändern der Vertiefungen 118, die sich bei der Auswertung des Data-Matrix-Codes 114 in Form eines ungenügenden Qualitätsparameters, welcher beispielsweise nach ISO 16022 als "Print Growth" bezeichnet wird.

Eine weitere ungünstige Konstellation ergibt sich durch eine Brechung des Lichts an den runden Glasoberflächen 112 der Spritzenkörper 110. Diese bewirken eine Abschattung des Bildes, was ebenfalls die Auswertung erschwert. Nur Strahlen des Lichts 122 mit einem sehr geringen Öffnungswinkel, also beispielsweise einer Abweichung zur optischen Achse von nicht mehr als 10° oder weniger, erreichen die Vertiefung 118 und erzeugen dort einen Schatten.

Werden hingegen mehrere Lichtquellen 120 eingesetzt, so entsteht im Wesentlichen eine diffuse Beleuchtung, bei der die aus allen Richtungen einfallenden Strahlen keinen verwertbaren Kontrast erzeugen.

Ein Beispiel einer mit dieser herkömmlichen Technik gemäß Figur 1 aufgenommenen Oberfläche 112 mit einem Data-Matrix-Code 114 ist, wie oben beschrieben, in Figur 4 dargestellt. Es lässt sich zwar erkennen, dass die Vertiefungen 118 als einzelne Bildpunkte 128 mit bloßem Auge erkennbar sind. Obwohl diese Bildpunkte 128 mit dem Auge sichtbar sind, ist der Kontrast dieser Bildpunkte 128 äußerst schwach, das heißt diese Bildpunkte 128 heben sich nur ungenügend vom Hintergrund der Oberfläche 112 ab. Die Voraussetzung für eine Decodierung bzw. Auslesung des Data-Matrix-Codes 114 ist aber ein möglichst hoher Kontrast zwischen den Bildpunkten 128 und dem Hintergrund der Oberfläche 112. Ein derartiger Code gemäß Figur 4 lässt sich daher nur ungenügend oder mit hoher Unsicherheit decodieren.

In Figur 2 ist hingegen ein erfindungsgemäßes Beleuchtungsverfahren und eine Vorrichtung 130 zum Auslesen eines Codes in zu Figur 1 analoger Darstellung gezeigt. Die Vorrichtung 130 ist in Figur 3 nochmals fotografisch dargestellt.

Die Vorrichtung 130 umfasst wiederum eine Lichtquelle 120. Beispielsweise kann diese Lichtquelle 120 eine Leuchtdiode, insbesondere eine anorganische Leuchtdiode, umfassen. Beispielsweise können Leuchtdioden eingesetzt werden, welche im sichtbaren Spektralbereich emittieren, beispielsweise Leuchtdioden, welche weißes Licht emittieren und/oder rotes und/oder grünes Licht.

Weiterhin umfasst die Vorrichtung 130 ein Abbildungssystem 132, welches in Figur 2 lediglich symbolisch angedeutet ist. Dieses Abbildungssystem 132 umfasst in dem dargestellten Ausführungsbeispiel eine Sammellinse 134, beispielsweise eine plankonvexe Sammellinse 134 mit einer Brennweite von 10 bis 30 mm. Auch komplexere Ausgestaltungen des Abbildungssystems 132 sind grundsätzlich denkbar. Das Abbildungssystem 132 ist, wie aus der symbolischen Darstellung des Strahlengangs in Figur 2 hervorgeht, eingerichtet, um einen gebündelten Lichtstrahl 136, in diesem Fall einen konvergierenden Lichtstrahl 136, zu erzeugen. Dieser gebündelte Lichtstrahl 136 konvergiert hin zu einer optischen Achse 138, wobei vorzugsweise Randstrahlen 140 des gebündelten Lichtstrahls 136 mit der optischen Achse 138 einen Winkel einschließen, welcher nicht weniger als 10°, vorzugsweise nicht weniger als 20° beträgt.

Wie oben dargestellt, stellen die Vertiefungen 118 des Data-Matrix-Codes 114 Streulinsen dar. Besonders bevorzugt ist es, wenn sich die (positive) Brennweite der Sammellinse 134 gegen die (negative) Brennweite der Vertiefungen 118 zumindest weitgehend aufhebt.

Weiterhin umfasst die Vorrichtung 130 gemäß den Figuren 2 und 3 ein Bilderfassungssystem 142, welches in Figur 2 lediglich angedeutet ist. Wie in Figur 3 erkennbar, kann dieses Bilderfassungssystem 142 eine eigene Optik 144 aufweisen, beispielsweise um ein Abbild des Data-Matrix-Codes 114 auf einem Bildsensor (in Figur 3 nicht dargestellt, in Figur 2 durch die Bezugsziffer 146 angedeutet), beispielsweise einem CCD und/oder CMOS-Chip, zu erzeugen. Weiterhin kann das Bilderfassungssystem 142, wie oben dargestellt, ein (ebenfalls in den Figuren nicht dargestelltes) Bilderkennungssystem umfassen, welches in Figur 2 mit der Bezugsziffer 148 bezeichnet ist. Dieses kann beispielsweise Bestandteil einer Kamera sein oder kann auch separat angeordnet sein, beispielsweise in einem Computersystem, welches eingerichtet ist, um Bilddaten des Bildsensors 146 auszuwerten und den Data-Matrix-Code 114 auszulesen bzw. zu decodieren.

Bei dem in Figur 2 dargestellten Verfahren und der dargestellten Vorrichtung 130 gehen zwar vorzugsweise die Strahlen des Lichts 122 wiederum von einer Punktlichtquelle 120 aus. Diese treffen den Glaskörper 124 des Spritzenkörpers 110 jedoch nicht als divergierendes Strahlenbündel, sondern strahlen konzentrisch von außen nach innen, konvergieren also. Dies ist in Figur 2 erkennbar. Durch den aufgezeigten Strahlengang gelangt nun viel gerichtetes Licht auf die Vertiefung 118, welche die Bildpunkte 128 des Data-Matrix-Codes 114 darstellen. Lediglich einer dieser Bildpunkte 128 ist in Figur 2 symbolisch angedeutet. Dort wird das Licht noch einmal gebrochen und gestreut, wobei diese Streuung vorzugsweise die Konvergenz des gebündelten Lichtstrahls 136 höchstens kompensiert. Dadurch erscheint die Vertiefung 118 im Bilderfassungssystem 142 als schwarzer Punkt vor weißem Hintergrund.

Der Abstand zwischen der Lichtquelle 120 und einer Hauptebene 150 des Abbildungssystems 132 bzw. der Sammellinse 134 ist in Figur 2 symbolisch mit g bezeichnet. Der Abstand zwischen der Hauptebene 150 und dem Data-Matrix-Code 114 bzw. der Oberfläche 112 ist symbolisch mit dem Buchstaben x bezeichnet. Vorzugsweise sind diese Abstände g und x derart gewählt, dass für diese die Linsengleichung gilt, so dass

$$\frac{1}{g} + \frac{1}{x} = \frac{1}{f}$$, wobei f die Brennweite des Abbildungssystems 132 bzw. der Sammellinse 134 ist. Dadurch wird vorzugsweise die Lichtquelle 120 auf den Data-Matrix-Code 114 abgebildet. Damit sich die Vorrichtung 130 auch auf unterschiedliche Behälterdurchmesser einstellen lässt, also beispielsweise auf Spritzenkörper 110 mit unterschiedlichen Dimensionen, sollte ein Abstand zwischen der Lichtquelle 120 und dem Abbildungssystem 132 variabel ausgestaltet sein. Beispielsweise kann der in Figur 2 dargestellte Abstand g zwischen der Lichtquelle 120 und der Hauptebene 150 als variabler Abstand ausgestaltet werden. So kann, wie in Figur 3 erkennbar, die Lichtquelle 120 beispielsweise mittels einer Stellschraube 152 entlang einer optischen Achse 138 (in Figur 3 nicht dargestellt, in Figur 2 erkennbar) verschoben werden. Das Bilderfassungssystem 142, der Data-Matrix-Code 114 und die Lichtquelle 120 sind vorzugsweise entlang der optischen Achse 138 angeordnet. Auch die Optik 144 des Bilderfassungssystems 142 kann als variable Optik, beispielsweise als Optik mit variabler Brennweite, ausgestaltet sein.

In Figur 5 ist ein mit der Vorrichtung 130 gemäß den Figuren 2 und 3 aufgenommenes Bild des Data-Matrix-Codes 114 dargestellt. Hierbei ist deutlich zu erkennen, dass sich die Bildpunkte 128 als dunkle Punkte bzw. näherungsweise schwarze Kreise sehr gleichmäßig vom hellen Hintergrund der Oberfläche 112 abheben. Ein derartiger Code lässt sich fehlerfrei lesen, was einem "Grade A" nach ISO 16022 entspricht.

Lediglich im Zentrum der Bildpunkte 128 ist noch ein heller Punkt 154 erkennbar. Bei einer Anordnung der Komponenten der Vorrichtung 130 entlang der optischen Achse 138 ist dieser helle Punkt 154 im Wesentlichen zentral in den schwarzen Kreisscheiben der Bildpunkte 128 angeordnet. Dieser helle Punkt 154 kommt, wie oben dargestellt, dadurch zustande, dass die Zentrumsstrahlen 126 des von der Lichtquelle 120 emittierten Lichts 122 im Wesentlichen ungebrochen das Abbildungssystem 132 und die Streulinsen der Vertiefungen 118 passieren und zum Bilderfassungssystem 142 gelangen. Diese hellen Punkte 154 stören jedoch, aufgrund des ansonsten hervorragenden Kontrastes der Bildpunkte 128, die Erfassung des Data-Matrix-Codes 114 nicht oder nur unwesentlich. Diese hellen Punkte 154 lassen sich durch eine Defokussierung des Abbildungssystems 132 und/oder durch eine Defokussierung der Optik 144 des Bilderfassungssystems 142 beseitigen. Alternativ oder zusätzlich kann auch eine virtuelle Beseitigung dieser hellen Punkte 154 mittels des Bilderkennungssystems 148 erfolgen, beispielsweise indem die Bildtaten geringfügig mit einem Weichzeichner oder sonstigen, in der Bildverarbeitung üblichen Filtertechniken bearbeitet werden, bevor eine Auswertung der Bildpunkte 128 erfolgt.

Insgesamt zeigt ein Vergleich der Figuren 4 und 5 somit, dass das vorgeschlagene Verfahren eine erhebliche Verbesserung des Kontrasts und somit eine erhebliche Verbesserung der Zuverlässigkeit des Auslesens des Data-Matrix-Codes 114 bewirkt. Auf diese Weise lässt sich somit eine der wesentlichen Problematiken bei der Codierung medizinischer Behältnisse, wie beispielsweise von Spitzenkörpern 110, nämlich ein zuverlässiges Auslesen der Codes, lösen.

Bezugszeichenliste

110 Spritzenkörper
112 Oberfläche
114 Data-Matrix-Code
116 Module
118 Vertiefung
120 Lichtquelle
122 Licht
124 Glaskörper
126 Zentrumsstrahl
128 Bildpunkte
130 Vorrichtung zum Auslesen von Codes
132 Abbildungssystem
134 Sammellinse
136 gebündelter Lichtstrahl
138 optische Achse
140 Randstrahlen
142 Bilderfassungssystem
144 Optik des Bilderfassungssystems
146 Bildsensor
148 Bilderkennungssystem
150 Hauptebene
152 Stellschraube
154 heller Punkt

**Patentansprüche**

1. Verfahren zur Identifikation medizinischer Behältnisse, insbesondere von Spritzenkörpern (110) aus Glas, wobei ein Code (114) verwendet wird, bei welchem mindestens eine Oberfläche (112) des medizinischen Behältnisses mit einer Mehrzahl von Bildpunkten (128) mit jeweils mindestens einer Vertiefung (118) versehen ist, wobei mindestens eine Lichtquelle (120) verwendet wird, wobei mittels der Lichtquelle (120) der Code (114) beleuchtet wird und wobei mittels mindestens eines Bilderfassungssystems (142) ein Bild des Codes (114) aufgenommen wird, wobei ein Abbildungssystem (132) verwendet wird, wobei mittels des Abbildungssystems (132) aus einem Licht (122) der Lichtquelle (120) ein gebündelter Lichtstrahl (136) erzeugt wird, wobei die Oberfläche (112) zumindest teilweise mit dem gebündelten Lichtstrahl (136) beleuchtet wird.

2. Verfahren nach dem vorhergehenden Anspruch, wobei der gebündelte Lichtstrahl (136) im Bereich der Oberfläche (112) als konvergierender Lichtstrahl (136) ausgestaltet ist.

3. Verfahren nach einem der vorhergehenden Ansprüche, wobei das Bilderfassungssystem (142) und die Lichtquelle (120) auf gegenüberliegenden Seiten der Oberfläche (112) angeordnet sind.

4. Verfahren nach einem der vorhergehenden Ansprüche, wobei die Lichtquelle (120) im Wesentlichen auf die codierte Oberfläche (112) abgebildet wird.

5. Verfahren nach einem der vorhergehenden Ansprüche, wobei das Abbildungssystem (132) mindestens eine Sammellinse (134) umfasst.

6. Verfahren nach einem der vorhergehenden Ansprüche, wobei ein Abstand (g) zwischen der Lichtquelle (120) und dem Abbildungssystem (132) variabel ausgestaltet wird.

7. Verfahren nach einem der vorhergehenden Ansprüche, wobei die Lichtquelle (120) im Wesentlichen punktförmig ausgestaltet ist.

8. Verfahren nach einem der vorhergehenden Ansprüche, wobei die Lichtquelle (120) mindestens eine Leuchtdiode umfasst.

9. Verfahren nach einem der vorhergehenden Ansprüche, wobei die Vertiefungen (118) mittels mindestens eines Lasers, insbesondere eines gepulsten Lasers im infraroten Spektralbereich, erzeugt werden.

10. Verfahren nach dem vorhergehenden Anspruch, wobei das medizinische Behältnis während eines Laserbeschusses zumindest im Bereich des Codes (114) auf einer Temperatur oberhalb der Glastransformationstemperatur gehalten wird.

11. Verfahren nach einem der vorhergehenden Ansprüche, wobei das Bilderfassungssystem (142) einen Bildsensor (146) zur Aufnahme von Bilddaten umfasst, wobei das Bilderfassungssystem (142) weiterhin ein Bilderkennungssystem (148) umfasst.

12. Verfahren nach dem vorhergehenden Anspruch, wobei das Bilderkennungssystem (148) eingerichtet ist, um die Bildpunkte (128) als geschlossene dunkle Regionen, vorzugsweise als geschlossene dunkle Kreisscheiben, zu erkennen.

13. Vorrichtung (130) zur Identifikation medizinischer Behältnisse, insbesondere von Spritzenkörpern (110) aus Glas, insbesondere unter Verwendung eines Verfahrens nach einem der vorhergehenden Ansprüche, wobei das medizinische Behältnis mit einem Code (114) markiert ist, bei welchem mindestens eine Oberfläche (112) des medizinischen Behältnisses mit einer Mehrzahl von Bildpunkten (128) mit jeweils mindestens einer Vertiefung (118) versehen ist, wobei die Vorrichtung (130) mindestens eine Lichtquelle (120) aufweist, wobei die Vorrichtung (130) eingerichtet ist, um mittels der Lichtquelle (120) den Code (114) zu beleuchten, wobei die Vorrichtung (130) weiterhin mindestens ein Bilderfassungssystem (142) aufweist, wobei mittels des Bilderfassungssystems (142) ein Bild des Codes (114) aufnehmbar ist, wobei die Vorrichtung (130) weiterhin ein Abbildungssystem (132) aufweist, wobei die Vorrichtung (130) eingerichtet ist, um mittels des Abbildungssystems (132) aus einem Licht (122) der Lichtquelle (120) einen gebündelten Lichtstrahl (136) zu erzeugen, wobei die Oberfläche (112) zumindest teilweise mit dem gebündelten Lichtstrahl (136) beleuchtet wird.

Fig. 1

Fig. 2

Fig. 3

Fig. 4

Fig. 5

Europäisches
Patentamt

European
Patent Office

Office européen
des brevets

**EUROPÄISCHER RECHERCHENBERICHT**

Nummer der Anmeldung

EP 08 16 2838

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | DE 102 34 002 A1 (SCHOTT GLAS [DE] SCHOTT AG [DE]) 12. Februar 2004 (2004-02-12) | 1,2,4,5, 7,9,10, 13 | INV.<br>G06K19/06<br>G06K7/10 |
| Y | * Absatz [0059] * | 3,6,8, 11,12 | |
| | * Absatz [0062] *<br>* Absatz [0064] *<br>* Absatz [0075] *<br>* Absatz [0080] *<br>* Absatz [0084] *<br>* Absatz [0098] *<br>* Absatz [0106] *<br>* Absatz [0108] *<br>* Abbildungen 1,3-7 *<br>----- | | |
| Y | EP 0 996 078 A (ESSILOR INT [FR]) 26. April 2000 (2000-04-26) | 3,6,8, 11,12 | |
| A | | 1,2,4,5, 7,13 | |
| | * Zusammenfassung *<br>* Absatz [0027] - Absatz [0028] *<br>* Absatz [0031] *<br>* Absatz [0036] *<br>* Absatz [0054] *<br>* Anspruch 1 *<br>* Abbildung 1 *<br>----- | | RECHERCHIERTE SACHGEBIETE (IPC)<br><br>G06K |
| D,X | WO 2006/117692 A (BECTON DICKINSON FRANCE [FR]; GRIMARD JEAN-PIERRE [FR]) 9. November 2006 (2006-11-09) | 1,4,9,13 | |
| A | | 2,3,5-8, 10-12 | |
| | * Seite 9, Zeile 27 - Seite 10, Zeile 8 *<br>* Seite 11, Zeile 30 - Zeile 34 *<br>* Seite 16, Zeile 18 - Seite 17, Zeile 16 *<br>* Abbildung 1 *<br>----- | | |

Der vorliegende Recherchenbericht wurde für alle Patentansprüche erstellt

| Recherchenort | Abschlußdatum der Recherche | Prüfer |
|---|---|---|
| Den Haag | 16. Februar 2009 | Jacobs, Peter |

EPO FORM 1503 03.82 (P04C03)

# EP 2 157 533 A1

**ANHANG ZUM EUROPÄISCHEN RECHERCHENBERICHT**
**ÜBER DIE EUROPÄISCHE PATENTANMELDUNG NR.**

EP 08 16 2838

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-02-2009

| Im Recherchenbericht angeführtes Patentdokument | | Datum der Veröffentlichung | Mitglied(er) der Patentfamilie | | | Datum der Veröffentlichung |
|---|---|---|---|---|---|---|
| DE 10234002 | A1 | 12-02-2004 | CN | 1488467 | A | 14-04-2004 |
| EP 0996078 | A | 26-04-2000 | DE | 69936754 | T2 | 30-04-2008 |
| | | | ES | 2292228 | T3 | 01-03-2008 |
| | | | FR | 2784767 | A1 | 21-04-2000 |
| | | | US | 6354504 | B1 | 12-03-2002 |
| WO 2006117692 | A | 09-11-2006 | CN | 101247844 | A | 20-08-2008 |
| | | | EP | 1877118 | A1 | 16-01-2008 |
| | | | FR | 2885071 | A1 | 03-11-2006 |
| | | | JP | 2008539136 | T | 13-11-2008 |
| | | | KR | 20080011408 | A | 04-02-2008 |

EPO FORM P0461

Für nähere Einzelheiten zu diesem Anhang : siehe Amtsblatt des Europäischen Patentamts, Nr.12/82

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006117692 A1
- DE 10122335 C1
- DE 10234002 A1
- DE 102334002 A1